# EUROPÄISCHE PATENTSCHRIFT

(11) **EP 3 338 943 B1**
(45) Veröffentlichungstag und Bekanntmachung des Hinweises auf die Patenterteilung: **03.11.2021**
(21) Anmeldenummer: 17205885.1
(22) Anmeldetag: 07.12.2017
(51) Int. Cl.: B23Q 9/00, F16C 29/02, F16C 33/20, F16C 29/00

(54) **FÜHRUNGSSCHIENE**
GUIDE RAIL
RAIL DE GUIDAGE

(30) Priorität: 23.12.2016 DE 102016125629
(43) Veröffentlichungstag der Anmeldung: 27.06.2018
(73) Patentinhaber: Mafell AG, 78727 Oberndorf a.N. (DE)
(72) Erfinder: Faißt, Rainer, 72175 Dornhan-Weiden (DE)
(74) Vertreter: Manitz Finsterwald Patent- und Rechtsanwaltspartnerschaft mbB

(56) Entgegenhaltungen:
- EP-A1- 0 971 136
- EP-A1- 2 320 101
- WO-A1-02/18095
- DE-A1-102006 057 951
- US-A- 4 394 800
- US-A1- 2003 233 925
- US-A1- 2012 198 717

## Beschreibung

Die vorliegende Erfindung betrifft eine Führungsschiene für elektrische Bearbeitungsmaschinen, die zum Auflegen oder Aufspannen auf ein Werkstück ausgebildet ist und eine Längsführung zum Führen einer Bearbeitungsmaschine in einer Längsrichtung aufweist, wobei die Führungsschiene einen Basiskörper aus Kunststoff umfasst, und wobei der Basiskörper aus wenigstens zwei Kunststoffteilen zusammengefügt ist, zwischen denen wenigstens ein Hohlraum ausgebildet ist, und wobei die Kunststoffteile miteinander verschweißt sind, insbesondere mittels Ultraschallschweißen, und/oder, wobei die Kunststoffteile miteinander verklebt sind.

Führungsschienen für elektrische Bearbeitungsmaschinen wie z. B. Handkreissägen, Stichsägen oder Oberfräsen sind häufig aus Metall, beispielsweise Aluminium oder Magnesium, gefertigt, beispielsweise mittels eines Druckgussverfahrens. Metallische Führungsschienen weisen im Allgemeinen eine hohe Stabilität auf. Nachteilig ist jedoch das relativ hohe Gewicht. Ferner sind die Gleiteigenschaften metallischer Führungsschienen oft unzureichend und müssen durch zusätzliche Maßnahmen wie das Aufbringen von Gleitlacken oder das Vorsehen von Kunststoffeinlagen verbessert werden.

Führungsschienen aus Kunststoff sind leichter als metallische Führungsschienen, falls sie entsprechend dünn oder als Hohlprofile ausgebildet sind. Allerdings weisen dünne Schienen nur eine geringe Steifigkeit auf und neigen zudem zu plastischer Verformung, beispielsweise bei längerem Liegen in verbogenem Zustand. Eine plastische Verformung wird vom Benutzer nicht akzeptiert, selbst wenn damit keine Funktionseinschränkung einhergeht. Eine Herstellung von Kunststoff-Führungsschienen in Hohlprofiltechnik ist dagegen fertigungstechnisch schwierig, insbesondere bei Vorgabe einer geringen Schienenhöhe.

Die genannten Herausforderungen können sich grundsätzlich auch bei Anschlagschienen stellen, die dementsprechend auch unter den im Zusammenhang mit der Erfindung gebrauchten Begriff "Führungsschiene" fallen sollen.

Die WO 02/18095 A1 offenbart eine Führungsschiene gemäß dem Oberbegriff des Anspruchs 1.

Die US 2003/0233925 A1 offenbart ein System aus zusammensteckbaren Führungsschienenelementen mit Zusatzeinrichtungen.

In der US 4 394 800 ist eine Führungsschiene mit einer Klemmeinrichtung offenbart. Mittels eines Hebels kann bei dieser Führungsschiene das Werkstück zwischen zwei Klemmbacken der Führungsschiene eingespannt werden.

Die EP 2 320 101 A1 offenbart ein Führungsprofil für pneumatische oder hydraulische Linearantriebe, das aus einem hohlen Mantelelement und einer darin angeordneten Verstärkungsstruktur zusammengesetzt ist.

Es ist eine Aufgabe der Erfindung, eine leichte, stabile und einfach herstellbare Führungsschiene mit guten Gleiteigenschaften anzugeben.

Die Lösung der Aufgabe erfolgt durch eine Führungsschiene mit den Merkmalen des Anspruchs 1.

Erfindungsgemäß ist der Basiskörper aus wenigstens zwei Kunststoffteilen zusammengefügt, zwischen denen wenigstens ein Hohlraum ausgebildet ist. Der Hohlraum entsteht also erst beim Zusammenfügen der Kunststoffteile und muss daher nicht in ein Einzelteil hineingeformt werden. Dies erleichtert die Herstellung beträchtlich. Bei Bedarf könnten jedoch zusätzliche Hohlräume vorhanden sein, die in eines oder beide der Kunststoffteile direkt hineingeformt sind. Das Gesamtgewicht der Führungsschiene ist aufgrund des vorhandenen Hohlraums relativ gering, wobei dennoch eine ausreichende Festigkeit und Steifigkeit erzielbar ist. Die Erfindung beruht unter anderem auf der Erkenntnis, dass die Stabilität einer Kunststoff-Führungsschiene durch Vorsehen eines oder mehrerer Hohlräume oder Hohlkammern in weit geringerem Ausmaß verringert wird als das Eigengewicht. Ein weiterer Vorteil der Verwendung von Kunststoff als Material für den Basiskörper besteht in den guten Gleiteigenschaften, die eine Führung einer Bearbeitungsmaschine an der Führungsschiene erleichtert.

Vorzugsweise weisen die Kunststoffteile jeweils selbst keinen Hohlraum auf. Die Kunststoffteile können in diesem Fall jedes für sich auf einfache und kostengünstige Weise gefertigt werden, beispielsweise in einem Gieß-, Strangpress- oder Extrusionsverfahren.

Eine Ausführungsform der Erfindung sieht vor, dass der Hohlraum länglich ist und sich in der Längsrichtung erstreckt, vorzugsweise durch den gesamten Basiskörper hindurch. Die Gewichtsersparnis ist bei dieser Ausgestaltung besonders hoch.

Der Hohlraum kann an den jeweiligen Längsenden des Basiskörpers offen sein, sodass der Basiskörper ein leicht zu fertigendes Hohlprofil bildet. Grundsätzlich könnte der Hohlraum aber auch rundum geschlossen sein.

Eine weitere Ausführungsform sieht vor, dass zwischen den Kunststoffteilen mehrere Hohlräume ausgebildet sind, die über eine quer zur Längsrichtung verlaufende Querschnittsfläche des Basiskörpers verteilt angeordnet sind. Der Basiskörper kann also nach dem Zusammenfügen der Kunststoffteile eine Aneinanderreihung von Hohlräumen aufweisen, die durch relativ dünne Wandabschnitte voneinander getrennt sind. Ein solcher Basiskörper weist ein besonders geringes Eigengewicht auf und ist dennoch vergleichsweise formstabil.

Es kann vorgesehen sein, dass der Anteil der Hohlräume an der insgesamt durch den Basiskörper ausgefüllten Querschnittsfläche wenigstens 25% und vorzugsweise wenigstens 40% beträgt. Ebenso können die Hohlräume ein Volumen von wenigstens 25% und vorzugsweise von wenigstens 40% des Gesamtvolumens des Basiskörpers ausmachen.

Eine weitere Ausführungsform sieht vor, dass der Hohlraum oder einige einer Mehrzahl von Hohlräumen jeweils eine Höhe und eine Breite quer zur Längsrichtung aufweisen, wobei die Breite ein Vielfaches, insbesondere zumindest das 3-bis 5-fache, bevorzugt zumindest das 5- bis 7-fache, der Höhe beträgt. Längliche und flache Hohlräume sind für die üblichen Ausgestaltungen von Führungsschienen besonders geeignet.

Es kann vorgesehen sein, dass der Hohlraum oder einige einer Mehrzahl von Hohlräumen jeweils eine Höhe und eine Breite quer zur Längsrichtung aufweisen, wobei die Höhe kleiner ist als die Breite und etwa im Bereich von 1 mm bis 3 mm liegt, insbesondere im Bereich von 1,5 mm bis 2,5 mm und insbesondere zwischen 1,9 mm und 2,3 mm.

Vorzugsweise sind die Kunststoffteile jeweils durch einen Verbund aus flächigen Wandabschnitten mit einer maximalen Wandstärke von weniger als 2,5 mm, vorzugsweise von weniger als 1,5 mm und besonders bevorzugt zwischen 1,2 mm und 1,4 mm gebildet. Es ist also bevorzugt, die Kunststoffteile ohne großvolumige materialgefüllte Bereiche auszuführen, weil hierdurch die Gewichtsersparnis groß ist und die gleichzeitige Verringerung der Stabilität nur gering ist.

Die Kunststoffteile können Profile mit in Längsrichtung konstanter Querschnittsform sein, insbesondere Extrusionsprofile. Im Extrusionsverfahren lassen sich Kunststoffprofile sehr wirtschaftlich herstellen, und zwar insbesondere dann, wenn die Kunststoffprofile zwar nur eine geringe Höhe oder Dicke aufweisen dürfen, selbst aber keine Hohlräume aufzuweisen brauchen.

Die Kunststoffteile können jeweils aus einem faserverstärkten Kunststoff bestehen. Dies ermöglicht eine ausreichende Steigerung der Festigkeit, um auch flachen und mit Hohlräumen versehenen Führungsschienen eine akzeptable Steifigkeit zu verleihen.

Der faserverstärkte Kunststoff kann als Matrix einen Thermoplast, einen Duroplast oder ein Elastomer sowie Glas-, Keramik-, Kohlenstoff- und/oder Aramidfasern umfassen, wobei der Anteil der Fasern am faserverstärkten Kunststoff wenigstens 25 Volumen-% und vorzugsweise wenigstens 40 Volumen-% beträgt. Dies hat sich in der Praxis als besonders günstig erwiesen. Insbesondere hat sich gezeigt, dass faserverstärkter Kunststoff zwar gut extrudiert werden kann, flache Profile mit Hohlräumen allerdings schwierig zu realisieren sind, was jedoch dann unproblematisch ist, wenn diese Profile selbst jeweils keine Hohlräume aufweisen müssen, sondern mehrere Einzelprofile erst in einem zusammengefügten Zustand gemeinsam als Gesamtprofil einen oder mehrere Hohlräume definieren.

Gemäß einer erfindungsgemäßen Ausgestaltung sind die Kunststoffteile miteinander verschweißt, insbesondere mittels Ultraschallschweißen. Dies hat sich als besonders geeignete Verbindung erwiesen.

Gemäß einer alternativen erfindungsgemäßen Ausgestaltung sind die Kunststoffteile auch miteinander verklebt.

Gemäß einer speziellen Ausgestaltung ist der Basiskörper aus genau zwei Kunststoffteilen gebildet, wobei das eine Kunststoffteil ein Schienenoberteil ist, das die Längsführung aufweist, und wobei das andere Kunststoffteil ein Schienenunterteil ist, das eine werkstückseitige Auflagefläche aufweist. Beide Teile können als flache Extrusionsteile ausgeführt sein, die kostengünstig herstellbar sind.

Um den Halt an der Werkstückoberfläche zu verbessern, kann die Führungsschiene wenigstens ein flächiges Haftelement aus einem rutschhemmenden Material umfassen, das an der Auflagefläche des Schienenunterteils angeordnet ist. Beispielsweise können dünne Gummi-Streifen an der Auflagefläche des Schienenunterteils angeklebt sein.

Die Kunststoffteile können jeweils zumindest einen flächigen Plattenabschnitt aufweisen, wobei sich die flächigen Plattenabschnitte zumindest im Wesentlichen parallel zueinander erstrecken und über eine Anordnung von Distanzabschnitten miteinander verbunden sind, die von einem der flächigen Plattenabschnitte oder von beiden flächigen Plattenabschnitten abstehen. Aufgrund der Distanzabschnitte sind die Plattenabschnitte unter Bildung entsprechender Zwischenräume auf Abstand gehalten. Dies ermöglicht eine besonders einfache Hohlkammer-Konstruktion.

Die Distanzabschnitte können Stege sein, die sich in der Längsrichtung durch den gesamten Basiskörper hindurch erstrecken. Diese beanspruchen nur wenig Platz und tragen kaum zur Gewichtserhöhung bei.

Es kann vorgesehen sein, dass wenigstens einer der Distanzabschnitte an einem ersten Ende einstückig mit einem der Plattenabschnitte ausgebildet und an einem zweiten Ende in einer Aufnahme aufgenommen ist, die einstückig mit dem anderen Plattenabschnitt ausgebildet ist. Das Einführen des Distanzabschnitts in die Aufnahme erfolgt während des Zusammensetzens der Kunststoffteile vor dem eigentlichen Verbinden. Bei der Aufnahme kann es sich um eine Tasche oder dergleichen handeln, die ebenfalls durch schmale Stege oder Leisten gebildet sein kann. Die Aufnahme erleichtert das Zusammenfügen der beiden Kunststoffteile bei der Herstellung, da sie als Positionierhilfe wirkt. Außerdem kann die Aufnahme flüssiges Kunststoff-Material auffangen, das z. B. beim Verschweißen der Kunststoffteile entsteht.

Eine spezielle Ausgestaltung sieht vor, dass mehrere, insbesondere alle, Distanzabschnitte jeweils an einem ersten Ende einstückig mit einem der Plattenabschnitte ausgebildet und an einem zweiten Ende in einer Aufnahme aufgenommen sind, die am anderen Plattenabschnitt ausgebildet ist, wobei eine der Aufnahmen für ein spielfreies Aufnehmen des Distanzabschnitts und die übrigen Aufnahmen jeweils für ein spielbehaftetes Aufnehmen des Distanzabschnitts ausgelegt sind. Die für ein spielfreies Aufnehmen vorgesehene Aufnahme sorgt für eine exakte Positionierung der Kunststoffteile relativ zueinander. Dadurch dass die übrigen Aufnahmen ein gewisses Spiel gestatten, ist das Zusammenführen oder Zusammenstecken der Kunststoffteile erleichtert. Gemäß einer speziellen Ausgestaltung ist eine Aufnahme für Spielfreiheit ausgelegt, die bezüglich einer Quererstreckung der Führungsschiene zumindest ungefähr zentral angeordnet ist, während die übrigen Aufnahmen ein umso größeres Spiel aufweisen, je weiter sie von der zumindest ungefähr zentral angeordneten Aufnahme weg angeordnet sind.

Um ein möglichst reibungsarmes Gleiten der Bearbeitungsmaschine auf der Schienenoberseite zu ermöglichen, kann eine Anordnung aus Erhebungen an einem das Schienenoberteil bildenden Kunststoffteil vorgesehen sein. Insbesondere kann die Anordnung aus Erhebungen durch ein Wellenprofil gebildet sein.

Eine Ausführungsform der Erfindung sieht vor, dass eine zwischen einer werkstückseitigen Auflagefläche und einer maschinenseitigen Auflagefläche gemessene Schienenhöhe weniger als 10 mm beträgt und vorzugsweise zwischen 4 mm und 7 mm liegt. Derartige Schienenhöhen haben sich im Handwerksbereich als besonders geeignet erwiesen. Eine besonders bevorzugte Schienenhöhe ist 6 mm.

Die Erfindung betrifft auch ein System mit einer wie vorstehend beschriebenen Führungsschiene und einer Bearbeitungsmaschine, wobei die Führungsschiene lösbar an der Bearbeitungsmaschine anbringbar ist und die Bearbeitungsmaschine bei angebrachter Führungsschiene für eine durch die Führungsschiene geführte Werkstückbearbeitung längs der Führungschiene bewegbar ist. Solche Systeme werden häufig als Kapp-Sägesysteme verwendet. Sie weisen eine einfache Handhabbarkeit auf, da die Säge und die Führungsschiene eine Einheit bilden und nicht separat gehandhabt werden müssen. Ein möglichst geringes Gewicht ist deshalb hier von besonderer Bedeutung, da die praktisch permanent mit der Säge gekoppelte Führungsschiene letztlich das Gewicht der Säge erhöht. Gerade bei Kapp-Sägesystemen muss die Führungsschiene zudem eine ausreichende Festigkeit aufweisen, da diese beim Ablegen zwischen anderen Bauteilen und Geräten häufig belastet wird. Eine erfindungsgemäße Führungsschiene ist hingegen ausreichend stabil und gleitfähig, um in einem Kapp-Sägesystem günstige Verwendung zu finden.

Weiterhin betrifft die Erfindung ein Verfahren zum Herstellen einer Führungsschiene für elektrische Bearbeitungsmaschinen, insbesondere einer wie vorstehend beschriebenen Führungsschiene.

Erfindungsgemäß werden folgende Schritte ausgeführt:
- Formen eines ersten Kunststoffteils,
- Formen wenigstens eines weiteren Kunststoffteils, und
- Zusammenfügen der geformten Kunststoffteile unter Bildung wenigstens eines nicht lediglich von einem der Kunststoffteile begrenzten Hohlraums zwischen den Kunststoffteilen.

Die erfindungsgemäß hergestellte Führungsschiene weist also wenigstens einen Hohlraum auf, der erst durch das Zusammenfügen der beiden Kunststoffteile entsteht. Wie vorstehend erwähnt erleichtert die mehrteilige Konstruktion die Herstellung, wobei insbesondere das Gesamtgewicht der hergestellten Führungsschiene aufgrund des vorhandenen Hohlraums relativ gering ist.

Vorzugsweise umfasst das Formen des ersten Kunststoffteils und/oder das Formen des zweiten Kunststoffteils einen Extrusionsprozess, der relativ einfach und kostengünstig durchführbar ist.

Gemäß einer erfindungsgemäßen Ausgestaltung des Verfahrens werden die Kunststoffteile durch Schweißen, insbesondere Ultraschallschweißen, zusammengefügt.

Gemäß einer alternativen erfindungsgemäßen Ausgestaltung des Verfahrens werden die Kunststoffteile auch durch Kleben zusammengefügt.

Weiterbildungen der Erfindung sind auch in den abhängigen Ansprüchen, der Beschreibung sowie den beigefügten Zeichnungen angegeben.

Die Erfindung wird nachfolgend beispielhaft unter Bezugnahme auf die Zeichnungen beschrieben.
- Fig. 1: ist eine perspektivische Ansicht einer erfindungsgemäßen Führungsschiene für elektrische Bearbeitungsmaschinen.
- Fig. 2: zeigt zwei zusammenzufügende Kunststoffteile der Führungsschiene nach Fig. 1 vor dem Zusammenfügen in einer Seitenansicht.
- Fig. 3: zeigt die Kunststoffteile gemäß Fig. 2 in zusammengefügtem Zustand.

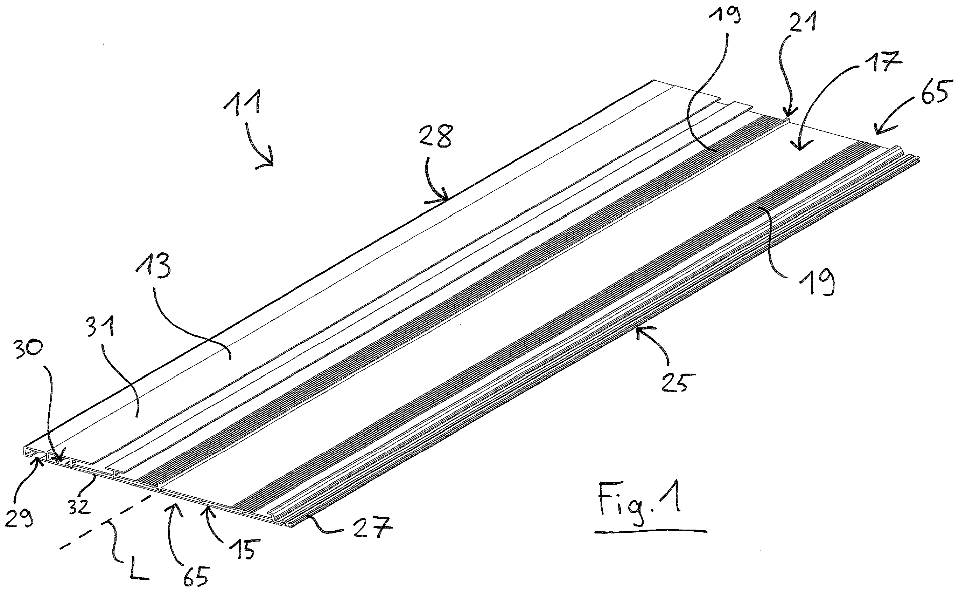

Die in Fig. 1 dargestellte Führungsschiene 11 umfasst einen flachen, länglichen Basiskörper 13 aus Kunststoff, dessen Unterseite 15 zumindest im Wesentlichen eben ist und demgemäß auf eine ebene Werkstückoberfläche aufgelegt werden kann. Das Auflegen muss nicht direkt erfolgen. Vielmehr ist es bevorzugt, dass an der Unterseite 15 des Basiskörpers 13 dünne Haftelemente aus einem rutschhemmenden Material angebracht sind, was in Fig. 1 jedoch nicht dargestellt ist. In dem dargestellten Zustand ist die Führungsschiene 11 durch den Basiskörper 13 gebildet. Eine erfindungsgemäße Führungsschiene 11 kann jedoch durch den Basiskörper 13 und zusätzliche Komponenten wie z. B. eine Gummilippe, eine Winkelskala oder die genannten Haftelemente gebildet sein.

An der Oberseite 17 des Basiskörpers 13 sind zwei Profilierungen 19 ausgebildet, die sich entlang der Längsachse L des Basiskörpers 13 erstrecken und die jeweils einen konvex gekrümmten oder wellenförmigen Querschnitt aufweisen. Weiterhin steht ein entlang der Längsachse L verlaufender Führungssteg 21 von der Oberseite 17 des Basiskörpers 13 ab. Die Grundplatte einer nicht dargestellten elektrischen Bearbeitungsmaschine kann derart auf die Oberseite 17 des Basiskörpers 13 aufgelegt werden, dass der Führungssteg 21 in eine an der Grundplatte ausgebildete Nut eingreift. Die Bearbeitungsmaschine kann auf diese Weise entlang einer vorgegebenen Anrisslinie über die Werkstückoberfläche geführt werden, wobei die Längsachse L die Längsrichtung der Führungsbewegung vorgibt und die Profilierungen 19, auf denen die Grundplatte der Bearbeitungsmaschine aufliegt, reibungsvermindernd wirken.

An der im Bild rechten Schmalseite 25 des Basiskörpers 13 ist eine Lippenaufnahme 27 ausgebildet, die sich entlang der Längsachse L über den gesamten Basiskörper 13 hinweg erstreckt und zur Aufnahme einer nicht dargestellten Gummilippe dient. An der im Bild linken Schmalseite 28 des Basiskörpers 13 befindet sich ein offener Führungskanal 29, der zur Lagerung eines beweglichen Anschlags dient. Ein benachbarter geschlossener Führungskanal 30 ist zur bedarfsweisen Unterbringung eines Gummizugs vorgesehen, wie er zum Beispiel für die Schienenrückstellung bei einem Kapp-Sägesystem verwendet wird. Insofern eignet sich die in Fig. 1 gezeigte Führungsschiene 11 in besonderer Weise zur Bildung eines Kapp-Sägesystems in Kombination mit einer Handkreissäge. Die erfindungsgemäße Führungsschiene 11 kann aber auch als separates Führungselement für beliebige elektrische Bearbeitungsmaschinen genutzt werden.

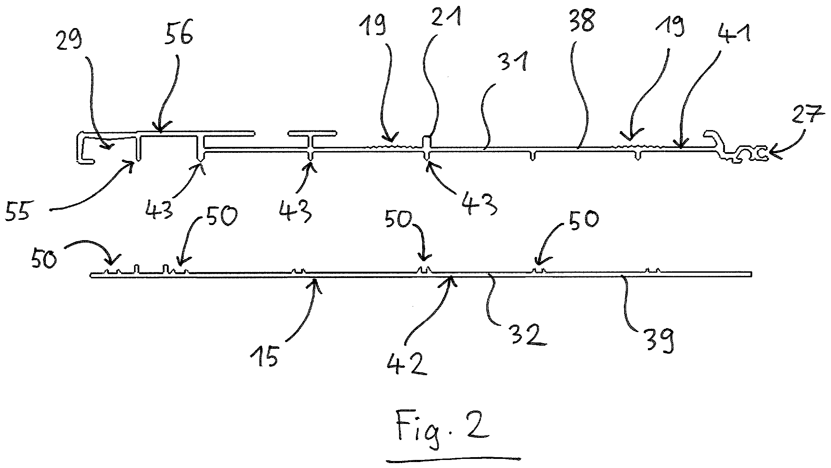

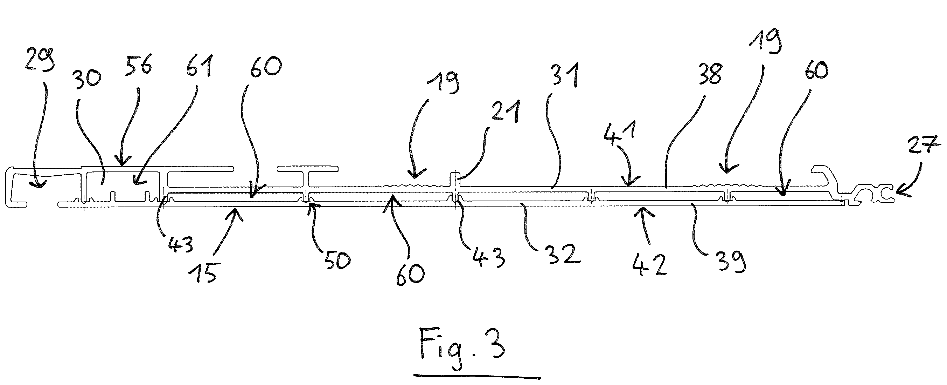

Der Basiskörper 13 ist nicht als einstückiges Bauteil geformt, sondern aus zwei Kunststoffteilen 31, 32 zusammengefügt, wie nachfolgend unter Bezugnahme auf Fig. 2 und 3 näher erläutert wird.

Beide Kunststoffteile 31, 32 sind mittels Extrusion aus einem faserverstärkten Kunststoff hergestellt, vorzugsweise aus einem faserverstärkten Kunststoff, der auf einer thermoplastischen Matrix mit einem Glas-, Keramik-, Kohlenstoff- und/oder Aramidfaseranteil von mindestens 40 Volumen-% beruht.

Um den Extrusionsprozess zu erleichtern, weisen die beiden Kunststoffteile 31, 32 jeweils für sich betrachtet keinerlei Hohlräume oder Hohlkammern auf. Eines der Kunststoffteile 31 ist als ein Schienenoberteil 38 vorgesehen. An diesem Kunststoffteil 31 ist der Führungssteg 21 ausgebildet. Auch die Lippenaufnahme 27 ist an demjenigen Kunststoffteil 31 ausgebildet, welches das Schienenoberteil 38 bildet. Das andere Kunststoffteil 32 ist als ein Schienenunterteil 39 vorgesehen und bildet die ebene Unterseite 15 der Führungsschiene 11.

Die Kunststoffteile 31, 32 weisen jeweils einen flächigen Plattenabschnitt 41, 42 mit einer Dicke von etwa 1,3 mm auf. Von dem Plattenabschnitt 41 des Schienenoberteils 38 stehen Distanzabschnitte 43 in Form von schmalen Stegen ab, die sich parallel zueinander entlang der Längsachse L (Fig. 1) durch den gesamten Basiskörper 13 hindurch erstrecken. Am Plattenabschnitt 42 des Schienenunterteils 39 sind Aufnahmen 50 ausgebildet, in welche die Distanzabschnitte 43 des Schienenoberteils 38 einführbar sind. Ein erweiterter Distanzabschnitt 55 erstreckt sich von einem randseitig an den Plattenabschnitt 41 des Schienenoberteils 38 angrenzenden Funktionsabschnitt 56, in welchem der offene Führungskanal 29 ausgebildet ist. Für den erweiterten Distanzabschnitt 55 ist ebenfalls eine zugehörige Aufnahme 50 am Schienenunterteil 39 vorgesehen.

Fig. 3 zeigt die beiden Kunststoffteile 31, 32 in einem verbundenen Zustand, in welchem sich die Enden der Distanzabschnitte 43, 55 in den jeweils zugehörigen Aufnahmen 50 befinden. Zur Erleichterung des Zusammensetzens ist eine der Aufnahmen 50 für ein zumindest im Wesentlichen spielfreies Aufnehmen eines Distanzabschnitts 43 ausgelegt, während die übrigen Aufnahmen 50 jeweils für ein spielbehaftetes Aufnehmen von Distanzabschnitten 43, 55 ausgelegt sind. Für eine korrekte Positionierung der beiden Kunststoffteile 31, 32 relativ zueinander reicht der spielfreie Sitz eines Distanzabschnitts 43 in einer Aufnahme 55 nämlich aus. Die übrigen Aufnahmen 50 dienen lediglich einem bedarfsweisen Auffangen von flüssigem Kunststoff, ermöglichen aufgrund des Spiels aber gleichzeitig einen Toleranzausgleich.

Zur Herstellung des Basiskörpers 13 werden die beiden Kunststoffteile 31, 32 zunächst wie in Fig. 3 gezeigt zusammengeführt. Anschließend werden die Enden der Distanzabschnitte 43, 55 mit dem Schienenunterteil 39 verschweißt, sodass die beiden Kunststoffteile 31, 32 zu einer festen Einheit gefügt sind. Vorzugsweise erfolgt das Verschweißen mittels Ultraschallschweißen. Bei bestimmten Anwendungen könnte auch ein Verkleben in Frage kommen. Im Ergebnis sind die beiden Plattenabschnitte 41, 42 voneinander beabstandet, wobei zwischen ihnen eine Anordnung aus Hohlräumen 60 gebildet ist. Jeder Hohlraum 60 ist zwischen zwei Distanzabschnitten 43 gebildet und erstreckt sich entlang der Längsachse L durch den gesamten Basiskörper 13 hindurch. An den Längsenden 65 (Fig. 1) des Basiskörpers 13 sind die Hohlräume 60 offen. Ein weiterer, vergrößerter Hohlraum 61 bildet im linken Bereich von Fig. 3 den geschlossenen Führungskanal 30.

Es versteht sich, dass die Distanzabschnitte 43 auch am Schienenunterteil 39 ausgebildet sein könnten. Auch ist es denkbar, sowohl am Schienenoberteil 38 als auch am Schienenunterteil 39 Distanzabschnitte auszubilden, die sich z. B. in der Mitte treffen. Die Distanzabschnitte 43 sind ebenso wie die Plattenabschnitte 41, 42 etwa 1,3 mm dick. Die Schienenhöhe der Führungsschiene 11, gemessen von der Oberkante der Profilierungen 19 bis zur Unterseite eines an der Unterseite 15 der Führungsschiene 11 angebrachten Haftelements, beträgt vorzugsweise etwa 6 mm.

Aufgrund der Hohlräume 60, 61, die einen relativ großen Anteil des Volumens des Basiskörpers 13 ausmachen, ist der Basiskörper 13 bei minimalen Einbußen hinsichtlich der Festigkeit sehr leichtgewichtig. Da die Hohlräume 60, 61 jedoch nicht in den Kunststoffteilen 31, 32 selbst ausgebildet sind, sondern sich erst beim Zusammensetzen bilden, ist die Herstellung relativ einfach und kostengünstig.

### Bezugszeichenliste:

- 11: Führungsschiene
- 13: Basiskörper
- 15: Unterseite
- 17: Oberseite
- 19: Profilierung
- 21: Führungssteg
- 25: Schmalseite
- 27: Lippenaufnahme
- 28: Schmalseite
- 29: offener Führungskanal
- 30: geschlossener Führungskanal
- 31, 32: Kunststoffteil
- 38: Oberteil
- 39: Unterteil
- 41, 42: Plattenabschnitt
- 43: Distanzabschnitt
- 50: Aufnahme
- 55: erweiterter Distanzabschnitt
- 56: Funktionsabschnitt
- 60: Hohlraum
- 61: vergrößerter Hohlraum
- 65: Längsende
- L: Längsachse

## Patentansprüche

1. Führungsschiene (11) für elektrische Bearbeitungsmaschinen, die zum Auflegen oder Aufspannen auf ein Werkstück ausgebildet ist und eine Längsführung (21) zum Führen einer Bearbeitungsmaschine in einer Längsrichtung (L) aufweist, wobei die Führungsschiene (11) einen Basiskörper (13) aus Kunststoff umfasst, und
wobei der Basiskörper (13) aus wenigstens zwei Kunststoffteilen (31, 32) zusammengefügt ist, zwischen denen wenigstens ein Hohlraum (60, 61) ausgebildet ist,
**dadurch gekennzeichnet, dass**
die Kunststoffteile (31, 32) miteinander verschweißt sind, insbesondere mittels Ultraschallschweißen, und/oder, dass
die Kunststoffteile (31, 32) miteinander verklebt sind.

2. Führungsschiene nach Anspruch 1,
**dadurch gekennzeichnet, dass**
die Kunststoffteile (31, 32) jeweils selbst keinen Hohlraum (60, 61) aufweisen.

3. Führungsschiene nach Anspruch 1 oder 2,
**dadurch gekennzeichnet , dass**
der Hohlraum (60, 61) länglich ist und sich in der Längsrichtung (L) erstreckt, vorzugsweise durch den gesamten Basiskörper (13) hindurch, und/oder, dass
der Hohlraum (60, 61) an den jeweiligen Längsenden (65) des Basiskörpers (13) offen ist.

4. Führungsschiene nach zumindest einem der vorstehenden Ansprüche, **dadurch gekennzeichnet, dass**
zwischen den Kunststoffteilen (31, 32) mehrere Hohlräume (60, 61) ausgebildet sind, die über eine quer zur Längsrichtung (L) verlaufende Querschnittsfläche des Basiskörpers (13) verteilt angeordnet sind, und/oder, dass
der Anteil der Hohlräume (60, 61) an der insgesamt durch den Basiskörper (13) ausgefüllten Querschnittsfläche wenigstens 25% und vorzugsweise wenigstens 40% beträgt.

5. Führungsschiene nach zumindest einem der vorstehenden Ansprüche, **dadurch gekennzeichnet, dass**
der Hohlraum (60, 61) oder einige einer Mehrzahl von Hohlräumen (60, 61) jeweils eine Höhe und eine Breite quer zur Längsrichtung (L) aufweisen, wobei die Breite ein Vielfaches, insbesondere zumindest das 3- bis 5-fache, bevorzugt zumindest das 5- bis 7-fache, der Höhe beträgt, und/oder, dass der Hohlraum (60, 61) oder einige einer Mehrzahl von Hohlräumen (60, 61) jeweils eine Höhe und eine Breite quer zur Längsrichtung aufweisen, wobei die Höhe kleiner ist als die Breite und etwa im Bereich von 1 mm bis 3 mm liegt, insbesondere im Bereich von 1,5 mm bis 2,5 mm und insbesondere zwischen 1,9 mm und 2,3 mm

6. Führungsschiene nach zumindest einem der vorstehenden Ansprüche, **dadurch gekennzeichnet, dass**
die Kunststoffteile (31, 32) jeweils durch einen Verbund aus flächigen Wandabschnitten (41, 42, 43, 55) mit einer maximalen Wandstärke von weniger als 2,5 mm, vorzugsweise von weniger als 1,5 mm und besonders bevorzugt zwischen 1,2 mm und 1,4 mm gebildet sind, und/oder, dass die Kunststoffteile (31, 32) Profile mit in Längsrichtung konstanter Querschnittsform sind, insbesondere Extrusionsprofile.

7. Führungsschiene nach zumindest einem der vorstehenden Ansprüche, **dadurch gekennzeichnet, dass**
die Kunststoffteile (31, 32) jeweils aus einem faserverstärkten Kunststoff bestehen, wobei insbesondere, dass
der faserverstärkte Kunststoff als Matrix einen Thermoplast, einen Duroplast oder ein Elastomer sowie Glas-, Keramik-, Kohlenstoff- und/oder Aramidfasern umfasst, wobei der Anteil der Fasern am faserverstärkten Kunststoff wenigstens 25 Volumen-% und vorzugsweise wenigstens 40 Volumen-% beträgt.

8. Führungsschiene nach zumindest einem der vorstehenden Ansprüche, **dadurch gekennzeichnet, dass**
der Basiskörper (13) aus genau zwei Kunststoffteilen (31, 32) gebildet ist, wobei das eine Kunststoffteil (31) ein Schienenoberteil (38) ist, das die Längsführung (21) aufweist, und das andere Kunststoffteil (32) ein Schienenunterteil (39) ist, das eine werkstückseitige Auflagefläche (15) aufweist.

9. Führungsschiene nach zumindest einem der vorstehenden Ansprüche, **dadurch gekennzeichnet, dass**
die Kunststoffteile (31, 32) jeweils zumindest einen flächigen Plattenabschnitt (41, 42) aufweisen, wobei sich die flächigen Plattenabschnitte (41, 42) zumindest im Wesentlichen parallel zueinander erstrecken und über eine Anordnung von Distanzabschnitten (43) miteinander verbunden sind, die von einem der flächigen Plattenabschnitte (41, 42) oder von beiden flächigen Plattenabschnitten (41, 42) abstehen, wobei insbesondere die Distanzabschnitte (43) Stege sind, die sich in der Längsrichtung (L) durch den gesamten Basiskörper (13) hindurch erstrecken.

10. Führungsschiene nach zumindest einem der vorstehenden Ansprüche, **dadurch gekennzeichnet, dass**
wenigstens einer der Distanzabschnitte (43) an einem ersten Ende einstückig mit einem der Plattenabschnitte (41, 42) ausgebildet und an einem zweiten Ende in einer Aufnahme (50) aufgenommen ist, die einstückig mit dem anderen Plattenabschnitt (41, 42) ausgebildet ist, und/oder, dass mehrere, insbesondere alle, Distanzabschnitte (43) jeweils an einem ersten Ende einstückig mit einem der Plattenabschnitte (41, 42) ausgebildet und an einem zweiten Ende in einer Aufnahme (50) aufgenommen sind, die am anderen Plattenabschnitt (41, 42) ausgebildet ist, wobei eine der Aufnahmen (50) für ein spielfreies Aufnehmen des Distanzabschnitts (43) und die übrigen Aufnahmen (50) jeweils für ein spielbehaftetes Aufnehmen des Distanzabschnitts (43) ausgelegt sind.

11. Führungsschiene nach zumindest einem der vorstehenden Ansprüche, **dadurch gekennzeichnet, dass**
eine zwischen einer werkstückseitigen Auflagefläche und einer maschinenseitigen Auflagefläche gemessene Schienenhöhe weniger als 10 mm beträgt und vorzugsweise zwischen 4 mm und 7 mm liegt.

12. System mit einer Führungsschiene (11) nach einem der vorhergehenden Ansprüche und einer Bearbeitungsmaschine,
wobei die Führungsschiene (11) lösbar an der Bearbeitungsmaschine anbringbar ist und die Bearbeitungsmaschine bei angebrachter Führungsschiene für eine durch die Führungsschiene geführte Werkstückbearbeitung längs der Führungsschiene (11) bewegbar ist.

13. Verfahren zum Herstellen einer Führungsschiene (11) für elektrische Bearbeitungsmaschinen, insbesondere einer Führungsschiene nach einem der vorhergehenden Ansprüche, mit den Schritten:
Formen eines ersten Kunststoffteils (31),
Formen wenigstens eines weiteren Kunststoffteils (32), und
Zusammenfügen der geformten Kunststoffteile (31, 32) unter Bildung wenigstens eines nicht lediglich von einem der Kunststoffteile (31, 32) begrenzten Hohlraums (60, 61) zwischen den Kunststoffteilen (31, 32),
**dadurch gekennzeichnet , dass**
die Kunststoffteile (31, 32) durch Schweißen, insbesondere Ultraschallschweißen, zusammengefügt werden, und/oder, dass die Kunststoffteile (31, 32) durch Kleben zusammengefügt werden.

14. Verfahren nach Anspruch 13,
**dadurch gekennzeichnet , dass**
das Formen des ersten Kunststoffteils (31) und/oder das Formen des zweiten Kunststoffteils (32) einen Extrusionsprozess umfasst.

## Claims

1. A guide rail (11) for electric processing machines which is configured for a placement or a clamping onto a workpiece and which has a longitudinal guide (21) for guiding a processing machine in a longitudinal direction (L), wherein the guide rail (11) comprises a base body (13) composed of plastic, and
wherein the base body (13) is assembled from at least two plastic parts (31, 32) between which at least one hollow space (60, 61) is formed, **characterized in that**
the plastic parts (31, 32) are welded to one another, in particular by means of ultrasound welding, and/or **in that**
the plastic parts (31, 32) are adhesively bonded to one another.

2. A guide rail in accordance with claim 1,
**characterized in that**
the plastic parts (31, 32) themselves each do not have a hollow space (60, 61).

3. A guide rail in accordance with claim 1 or claim 2,
**characterized in that**
the hollow space (60, 61) is elongate and extends in the longitudinal direction (L), preferably through the total base body (13), and/or **in that** the hollow space (60, 61) is open at the respective longitudinal ends (65) of the base body (13).

4. A guide rail in accordance with at least one of the preceding claims, **characterized in that**
a plurality of hollow spaces (60, 61) are formed between the plastic parts (31, 32) and are arranged distributed over a cross-sectional surface of the base body (13) extending transversely to the longitudinal direction (L); and/or **in that**
the proportion of the hollow spaces (60, 61) in the cross-sectional surface, which is overall filled by the base body (13), amounts to at least 25% and preferably at least 40%.

5. A guide rail in accordance with at least one of the preceding claims, **characterized in that**
the hollow space (60, 61) or some of a plurality of hollow spaces (60, 61) each have a height and a width transverse to the longitudinal direction (L), with the width amounting to a multiple, in particular at least 3 to 5 times, preferably at least 5 to 7 times, of the height; and/or **in that** the hollow space (60, 61) or some of a plurality of hollow spaces (60, 61) each have a height and a width transverse to the longitudinal direction, with the height being smaller than the width and approximately being in the range from 1 mm to 3 mm, in particular in the range from 1.5 mm to 2.5 mm, and in particular between 1.9 mm and 2.3 mm.

6. A guide rail in accordance with at least one of the preceding claims, **characterized in that**
the plastic parts (31, 32) are each formed by a composite of areal wall sections (41, 42, 43, 55) having a maximum wall thickness of less than 2.5 mm, preferably less than 1.5 mm, and particularly preferably between 1.2 mm and 1.4 mm, and/or **in that**
the plastic parts (31, 32) are profiles having a cross-sectional shape which is constant in the longitudinal direction, in particular extrusion profiles.

7. A guide rail in accordance with at least one of the preceding claims, **characterized in that**
the plastic parts (31, 32) each comprise a fiber-reinforced plastic, with in particular
the fiber-reinforced plastic, as a matrix, comprising a thermoplastic, a thermosetting plastic or an elastomer and glass fibers, ceramic fibers, carbon fibers and/or aramid fibers, with the proportion of fibers in the fiber-reinforced plastic amounting to at least 25% by volume and preferably at least 40% by volume.

8. A guide rail in accordance with at least one of the preceding claims, **characterized in that**
the base body (13) is formed from exactly two plastic parts (31, 32), with the one plastic part (31) being an upper rail part (38) which has the longitudinal guide (21) and the other plastic part (32) being a lower rail part (39) which has a support surface (15) at the workpiece side.

9. A guide rail in accordance with at least one of the preceding claims, **characterized in that**
the plastic parts (31, 32) each have at least one areal plate section (41, 42), with the areal plate sections (41, 42) extending at least substantially in parallel with one another and being connected to one another via an arrangement of spacer sections (43) which project from one of the areal plate sections (41, 42) or from both areal plate sections (41, 42), with in particular the spacer sections (43) being webs which extend in the longitudinal direction (L) through the total base body (13).

10. A guide rail in accordance with at least one of the preceding claims, **characterized in that**
at least one of the spacer sections (43) is formed in one piece with one of the plate sections (41, 42) at a first end and is received in a receiver (50), which is formed in one piece with the other plate section (41, 42), at a second end; and/or **in that**
a plurality of spacer sections (43), in particular all the spacer sections (43), are each formed in one piece with one of the plate sections (41, 42) at a first end and are received in a receiver (50), which is formed at the other plate section (41, 42), at a second end, with one of the receivers (50) being designed for a clearance-free reception of the spacer section (43) and the remaining receivers (50) each being designed for a reception of the spacer section (43) that is subject to a clearance.

11. A guide rail in accordance with at least one of the preceding claims, **characterized in that**
a rail height measured between a support surface at the workpiece side and a support surface at the machine side amounts to less than 10 mm and preferably amounts to between 4 mm and 7 mm.

12. A system comprising a guide rail (11) in accordance with any one of the preceding claims; and a processing machine,
wherein the guide rail (11) can be releasably attached to the processing machine and, when the guide rail is attached, the processing machine can be moved along the guide rail (11) for a workpiece processing guided by the guide rail.

13. A method of manufacturing a guide rail (11) for electric processing machines, in particular a guide rail in accordance with any one of the preceding claims, said method comprising the steps:
molding a first plastic part (31);
molding at least one further plastic part (32); and
joining together the molded plastic parts (31, 32) while forming at least one hollow space (60, 61), which is not only bounded by one of the plastic parts, between the plastic parts (31, 32),
**characterized in that**
the plastic parts (31, 32) are joined together by welding, in particular ultrasound welding, and/or **in that**
the plastic parts (31, 32) are joined together by adhesive bonding.

14. A method in accordance with claim 13,
**characterized in that**
the molding of the first plastic part (31) and/or the molding of the second plastic part (32) comprises/comprise an extrusion process.

## Revendications

1. Rail de guidage (11) pour machines d'usinage électriques, qui est réalisé pour être posé ou serré sur une pièce à usiner et qui présente un guidage longitudinal (21) pour guider une machine d'usinage dans une direction longitudinale (L), le rail de guidage (11) comprenant un corps de base (13) en matière plastique, et le corps de base (13) étant assemblé à partir d'au moins deux parties en matière plastique (31, 32), entre lesquelles est formée au moins une cavité (60, 61),
**caractérisé en ce que**
les parties en matière plastique (31, 32) sont soudées entre elles, en particulier par soudage par ultrasons, et/ou **en ce que**
les parties en matière plastique (31, 32) sont collées entre elles.

2. Rail de guidage selon la revendication 1,
**caractérisé en ce que**
les parties en matière plastique (31, 32) sont elles-mêmes dépourvues de cavité (60, 61).

3. Rail de guidage selon la revendication 1 ou 2,
**caractérisé en ce que**
la cavité (60, 61) est allongée et s'étend dans la direction longitudinale (L), de préférence à travers la totalité du corps de base (13),
et/ou **en ce que**
la cavité (60, 61) est ouverte aux extrémités longitudinales respectives (65) du corps de base (13).

4. Rail de guidage selon l'une au moins des revendications précédentes, **caractérisé en ce que**
plusieurs cavités (60, 61) sont formées entre les parties en matière plastique (31, 32) et sont disposées en répartition sur une surface de section transversale du corps de base (13) s'étendant transversalement à la direction longitudinale (L), et/ou **en ce que**
la proportion des cavités (60, 61) par rapport à la surface de section transversale remplie dans son ensemble par le corps de base (13) est d'au moins 25 % et de préférence d'au moins 40 %.

5. Rail de guidage selon l'une au moins des revendications précédentes, **caractérisé en ce que**
la cavité (60, 61) ou certaines d'une pluralité de cavités (60, 61) ont chacune une hauteur et une largeur transversalement à la direction longitudinale (L), la largeur étant un multiple de la hauteur, en particulier étant au moins 3 à 5 fois, de préférence au moins 5 à 7 fois la hauteur, et/ou **en ce que**
la cavité (60, 61) ou certaines d'une pluralité de cavités (60, 61) présentent chacune une hauteur et une largeur transversalement à la direction longitudinale, la hauteur étant inférieure à la largeur et étant approximativement dans la plage de 1 mm à 3 mm, en particulier dans la plage de 1,5 mm à 2,5 mm et en particulier entre 1,9 mm et 2,3 mm.

6. Rail de guidage selon l'une au moins des revendications précédentes, **caractérisé en ce que**
les parties en matière plastique (31, 32) sont formées chacune par un assemblage de portions de paroi surfaciques (41, 42, 43, 55) ayant une épaisseur de paroi maximale inférieure à 2,5 mm, de préférence inférieure à 1,5 mm et de manière particulièrement préférée entre 1,2 mm et 1,4 mm, et/ou **en ce que**
les parties en matière plastique (31, 32) sont des profilés ayant une forme de section transversale constante dans la direction longitudinale, en particulier des profilés d'extrusion.

7. Rail de guidage selon l'une au moins des revendications précédentes, **caractérisé en ce que**
les parties en matière plastique (31, 32) sont chacune constituées d'une matière plastique renforcée par des fibres, en particulier **en ce que** la matière plastique renforcée par des fibres comprend, comme matrice, un thermoplastique, un thermodurcissable ou un élastomère, et des fibres de verre, de céramique, de carbone et/ou d'aramide, la proportion des fibres par rapport à la matière plastique renforcée par les fibres étant d'au moins 25 % en volume et de préférence d'au moins 40 % en volume.

8. Rail de guidage selon l'une au moins des revendications précédentes, **caractérisé en ce que**
le corps de base (13) est formé précisément de deux parties en matière plastique (31, 32), l'une (31) des parties en matière plastique étant une partie supérieure de rail (38) qui présente le guidage longitudinal (21), et l'autre partie en matière plastique (32) étant une partie inférieure de rail (39) qui présente une surface d'appui (15) côté pièce à usiner.

9. Rail de guidage selon l'une au moins des revendications précédentes, **caractérisé en ce que**
les parties en matière plastique (31, 32) présentent chacune au moins une portion de plaque surfacique (41, 42), les portions de plaque surfaciques (41, 42) s'étendant au moins sensiblement parallèlement l'une à l'autre et étant reliées l'une à l'autre par un ensemble de portions d'écartement (43) qui font saillie de l'une des portions de plaque surfaciques (41, 42) ou des deux portions de plaque surfaciques (41, 42), les portions d'écartement (43) étant en particulier des barrettes qui s'étendent dans la direction longitudinale (L) à travers la totalité du corps de base (13).

10. Rail de guidage selon l'une au moins des revendications précédentes, **caractérisé en ce que**
l'une au moins des portions d'écartement (43) est formée à une première extrémité d'un seul tenant avec l'une des portions de plaque (41, 42) et est reçue à une deuxième extrémité dans un logement (50) qui est formé d'un seul tenant avec l'autre portion de plaque (41, 42), et/ou **en ce que** plusieurs portions d'écartement (43), en particulier toutes, sont formées chacune à une première extrémité d'un seul tenant avec l'une des portions de plaque (41, 42) et sont reçues à une deuxième extrémité dans un logement (50) qui est formé sur l'autre portion de plaque (41, 42), l'un des logements (50) étant conçu pour recevoir sans jeu la portion d'écartement (43) et les autres logements (50) étant chacun conçus pour recevoir avec jeu la portion d'écartement (43).

11. Rail de guidage selon l'une au moins des revendications précédentes, **caractérisé en ce que**
une hauteur de rail mesurée entre une surface de support côté pièce et une surface de support côté machine est inférieure à 10 mm et est de préférence comprise entre 4 mm et 7 mm.

12. Système comprenant un rail de guidage (11) selon l'une des revendications précédentes et une machine d'usinage,
dans lequel le rail de guidage (11) peut être fixé de manière détachable à la machine d'usinage, et la machine d'usinage est mobile le long du rail de guidage (11), le rail de guidage étant fixé, pour un usinage de la pièce guidé par le rail de guidage.

13. Procédé de fabrication d'un rail de guidage (11) pour machines d'usinage électriques, en particulier d'un rail de guidage selon l'une des revendications précédentes, comprenant les étapes consistant à :
mouler une première partie en matière plastique (31),
mouler au moins une autre partie en matière plastique (32), et
assembler les parties en matière plastique moulées (31, 32), en formant au moins une cavité (60, 61) entre les parties en matière plastique (31, 32), cavité qui est délimitée non seulement par l'une des parties en matière plastique (31, 32),
**caractérisé en ce que**
les parties en matière plastique (31, 32) sont assemblées par soudage, en particulier par soudage par ultrasons, et/ou **en ce que** les parties en matière plastique (31, 32) sont assemblées par collage.

14. Procédé selon la revendication 13,
**caractérisé en ce que**
le moulage de la première partie en matière plastique (31) et/ou le moulage de la deuxième partie en matière plastique (32) inclut un processus d'extrusion.
